# EUROPÄISCHE PATENTSCHRIFT

(11) **EP 4 140 708 B1**
(45) Veröffentlichungstag und Bekanntmachung des Hinweises auf die Patenterteilung: **19.03.2025**
(21) Anmeldenummer: 22188931.4
(22) Anmeldetag: 05.08.2022
(51) Int. Cl.: B29C 65/78, B29C 65/10, B29C 65/18, B29C 65/20, B29C 65/30, B29C 65/36, B29K 705/02

(54) **VORRICHTUNG UND VERFAHREN ZUM HERSTELLEN VON FOLIENSCHLAUCH AUS EINEM FOLIENBAND IM FORMSCHULTER-SCHWEISSVERFAHREN**
DEVICE AND METHOD FOR PRODUCING A FILM TUBE FROM A FILM STRIP IN A MOULDING COLLAR WELDING METHOD
DISPOSITIF ET PROCÉDÉ DE FABRICATION D'UN TUYAU EN FEUILLE À PARTIR D'UNE BANDE DE FEUILLE SELON LE PROCÉDÉ DE SOUDAGE AVEC CONFORMATEUR

(30) Priorität: 25.08.2021 DE 102021121988
(43) Veröffentlichungstag der Anmeldung: 01.03.2023
(73) Patentinhaber: Wolf, Roland, 70437 Stuttgart (DE)
(72) Erfinder: Wolf, Roland, 70437 Stuttgart (DE)
(74) Vertreter: Jeck, Jonathan

(56) Entgegenhaltungen:
- WO-A1-2012/106783

## Beschreibung

Die Erfindung betrifft eine Vorrichtung zum Herstellen von einem Folienschlauch in Breiten von 100 mm bis 285 mm und Längen über 250 m aus einem Folienband im Formschulter-Schweißverfahren zur weiteren Verarbeitung zu mit Luft oder flüssigen Medien befüllbaren Kabeldurchführungs- und Dehn- und Bewegungsfugenabdichtungen gemäß dem Oberbegriff des Anspruchs 1 sowie ein Verfahren gemäß dem Oberbegriff des Anspruchs 5.

Aus der WO2012/106783 A1 sind ein Verfahren und eine Vorrichtung bekannt, die bei der Herstellung von Dosen, Flaschen und mehr anwendbar sind. Die laminierte Folie 2 bewegt sich mit relativ konstanter Geschwindigkeit und wird um den Dorn 1 herum geformt. Über der Folienkante 7 ist eine Kompressions-/Kühlstange 10 mit einem Kühlkanal 11 und über der zweiten Kante 8 eine Kompressions-/Kühlstange 12 mit einem Kühlkanal 13 angeordnet. Das Profil des Dorns 1 im Heizbereich der überlappten Kanten 7 und 8 der Folie 2 weist zwischen den Kanten 7 und 8 eine Stufe 5 zum Bonner Hohlraum 6 auf.

Die Heizeinheit 3 ist eine Düse, die Heißluft in den Hohlraum 6 zuführt. Das Schmelzen der Folie 1 ist nur auf den Bereich beschränkt, der nicht in Kontakt mit den Kompressions-/Kühlstäben 10 und 12 und dem Dorn 1 ist. Während der Lutherbewegung der Folie 2 aufgrund der Änderung des Profils des Dorns 1, der sich in die Ebene 9 umwandelt, wird das Ende s angehoben, während das Ende 7 und die beiden in der Kompressions-/Kühlstange 10 zusammengepresst werden. Nach dem Schweißbereich muss die Schneide 4 geschnitten werden die Röhre in röhrenförmige Körper

Die europäischen Patentschriften EP 1867 904.B1, DE 10 2006 027888, EP Nr. 17166 769.4, PCT-EP 2017/ 065542, PCT-EP 16712 216.7 (2017) beschreiben die Anwendungsmöglichkeiten und EP 3056621 (2015) die Herstellung des Folienschlauchs gleichwertig zu Patent Nr. EP 1797764 B1 (2005).

Im Zeitraum 2003 bis 2005 wurde von Fibre Optics CT GmbH und Partner Getex Lenz GmbH eine alternative Variante zu Patent (Herstellverfahren) WO 9314335 zur Verschweißung von Folienschlauchlängen 0,6 m mit abschnittsweiser Faltung und Verschweißung im händischen Siegelschweißverfahren bis 23 m Länge entwickelt. Dieser Produktionsprozess wird seit 2013 zur Herstellung von Dehn- und Bewegungsfugenabdichtungen angewandt und durch die T-COM am 11.08.2005 mit Qualifikationsaudit "Entwicklungsmusterprüfung" freigegeben.

Die Erfindung betrifft eine Vorrichtung die besonders zum Herstellen von einem bis zu 500 m langen Folienschlauch aus einem bis 500 µm dicken, 5-schichtigen Alu-Verbund-Folienbands geeignet ist, bestehend aus einer Formschulter-Schweißeinrichtung, wobei das überlappende Folienband mittig mittels Formschulter in Kombination mit einem Wärmetauscher verpresst und mit einem Warmgas-Schweißgerät in Zugrichtung verschweißt wird und die Faltungen der Längskanten des Folienschlauchs durch die beheizte Formschulter flach geformt werden.

Der Transport des Folienbands und des zu transportierenden Folienschlauchs bis zur Aufwickelspule erfolgt über angetriebene Walzen zur Verpressung der Mittelschweißnaht und angetriebene Transportwalzen bis zum Warenspeicher.

Zur Steuerung der Materialgeschwindigkeit von Folienband und Folienschlauch bis zum Warenspeicher und Materialgeschwindigkeit bis zur Aufwickelspule befinden sich Tänzer (Pendel) mit Ein- und Ausschalter zur Anpassung von Geschwindigkeit und Transportkraft zwischen zwei Längsantrieben.

Für die bekanntesten Vorrichtungen zur Herstellung von einem bis zu 500 µm dicken Aluminium-Verbundfolienschlauch aus einem Folienband für gleichwertige Anwendungsbereiche und dessen Anforderungen gelten die Prüfgrundsätze PG-DMPK-1 und 2 für Kabelschutzrohr- und Gebäudedurchführungsabdichtungen und PG-FMPB-1 und 2 für Dehn- und Bewegungsfugenabdichtungen, nämlich
Variante 1:
   - Folienschlauch aus einem 180° gefalteten Folienband dessen überlappte Längskanten im Spiegel-Schweißverfahren verschweißt sind.
Variante 2:
   - Folienschlauch aus einem 180° gefalteten Folienband dessen überlappte Längskanten im Spiegel-Schweißverfahren verschweißt sind und anschließend der verschweißte Folienschlauch längsförmig um 180° zusammengepresst und die überlappten verschweißten Längskanten um 180° umgebogen sind.
Variante 3:
   - Folienschlauch aus einem Folienband mit innenliegender Trennlage aus silikonisiertem Papier oder Schleppzunge dessen Folienband im Faltbereich mittels Warmgasdüse (Heizluft) verschweißt sind. Gebrauchsmuster DE 20 2019 002 027 A1.
Variante 4:
   - Folienschlauch aus einem Folienband dessen überlappte Längs- und Querkanten händisch im Spiegel-Schweißverfahren verschweißt sind
   haben die bekannten Nachteile.
Variante 1:
   - Um 180° gefaltete und längsförmig überlappte **spiegelverschweißte Folienschläuche** bestehen nicht die Anforderungen gemäß den Prüfgrundsätzen PG-DMPK 2 in Bezug auf die geforderte Berstdruckbeständigkeit der Schweißnaht ca. 4 bar.
Variante 2:
   - Um 180° gefaltete und längsförmig überlappt **spiegelverschweißte Folienschläuche** sind so verpresst und nach der Verschweißung nochmals gefaltet, dass sich die überlappte Verschweißung mittig auf dem Flachschlauch befindet. Diese bestehen möglicherweise nicht die Anforderungen gemäß den Prüfgrundsätzen, weisen aber hinsichtlich der Biegefestigkeit in der Anwendung als Kabeldurchführungsabdichtung, insbesondere gemäß PG-DMPK-2 möglicherweise eine höhere Leckrate durch 4-lagig längsförmig überlappte Folienband-Querverschweißung auf.
Variante 3:
   - Längsförmig gefaltete, **bahngasverschweißte Folienschläuche** aus einem Folienband mit innenliegender Trennlage oder Schleppzunge im Warmgas-Schweißbereich (Heizluft) bestehen die Anforderungen gemäß Prüfgrundsätze für Kabeldurchführungs- und Dehn- und Bewegungsfugenabdichtungen nur **bei sehr hohem Prüfaufwand und hohen Ausfallraten.**
      Probleme bestehen:
      - eine unkontrollierte Überlappung des Folienbandes ohne Zwangsfixierung kann zur unsymmetrischen Überlappung und unkontrollierbaren, wechselnden Längskantenverschweißung führen, die bei Querverschweißung zu Undichtigkeiten führt.
      - Antihaft-Trenneinlagen mit silikonisiertem Papier führen bei Heizluft bis 100 l/min durch Versetzung der Trenneinlage im Folienschlauch zu Verschmelzungen der Folienoberseite mit der Folienunterseite
      - fehlende Folienschlauch- oder warm gefaltete Kanten führen zu Kaltbrüchen der Alu-Folie und zu Verlusten bei der Leckrate
Variante 4:
   - Folienschlauch mit überlappten Folien-Längs- und Querkanten, verschweißt im händischen Spiegelschweißverfahren, bestehen zwar grundsätzlich die Anforderungen gemäß Prüfgrundsätze PG-DMPK-1 und 2 für Kabelschutzrohr- und Gebäudedurchführungsabdichtungen und PG-FMPB-1 und 2 für Dehn- und Bewegungsfugenabdichtungen, haben jedoch den Nachteil, dass die Herstellung unwirtschaftlich ist.

Die bekannten Verfahren Variante Nr. 1 bis Variante Nr. 3 haben zudem den entscheidenden Nachteil, dass ohne Regelung der Transportgeschwindigkeit über Wärmespeicher, Tänzer, Ein- und Ausschalter etc. keine größeren Längen mit gleichbleibender Qualität hergestellt werden können.

Vorrichtungen und Eigenschaften zum Folienschlauch und Folienband sind öffentlich bekannt und veröffentlicht unter EP Nr. 3256656, DE 102015 101 963.9, die Ansprüche werden hier auszugsweise dargestellt:
"13. Vorrichtung nach einem der Ansprüche 1, 2, 3, 7, 8, 9, 10 und 11,
dadurch gekennzeichnet,
dass das Flachschlauchkissen (1, 1', 1", 6', 6", 16, 20, 21‴) aus einem gefalteten Band (1‴) oder Schlauch hergestellt ist, das bzw. der je nach dem Anwendungsbereich aus Thermoplast, Elastomeren und/oder schwer entflammbaren Thermoplast-Elastomer-Gemischen besteht, wobei diese Stoffe metallene und/oder metallfreie Einlagen aufweisen.
14. Vorrichtung nach einem der Ansprüche 1, 2, 3, 7 bis 11 und 13,
dadurch gekennzeichnet,
dass das Band (1‴) des Flachschlauchkissens (1, 1', 1", 6', 6", 16, 20, 21‴) vorzugsweise mindestens aus einer fünflagigen Thermoplast-Verbundfolie (1‴) mit dem Aufbau

| | |
|---|---|
| - 150-250 µm PE | - 150-250 µm PE |
| - 15-30 µm PET | - 15-30 µm PET |
| - 9-23 µm ALU | - 9-23 µm BLEI |
| - 15-30 µm PET | - 15-30 µm PET |
| - 150-250 µm PE | - 150-250 µm PE |

hergestellt ist.
15. Vorrichtung nach einem der Ansprüche 1, 2, 3, 7, 8, 9, 13, und 14, dadurch gekennzeichnet,
dass das Flachschlauchkissen eine Summenleckrate von
L = ..... 5,5 ≤ 6,2 x 10-8 mbarl/s, entspricht 2,7 mbarl/Jahr,
mit der gelieferten Ventilabschlusskappe aufweist.

16. Vorrichtung nach Anspruche 1, 4 und 15,
dadurch gekennzeichnet,
dass das Flachschlauchkissen mit
- Berstdruckbeständigkeit bis 9 bar
- Kerbzähigkeit bis 40 N/cm²
- Chemikalienbeständigkeit gegen pH2, pH12, Benzin, Diesel, Kerosin, Paraffinöl und Temperaturbeständigkeit von -60°C bis +70°C hergestellt ist."

Die Erfindung ist in einem ersten Aspekt durch eine Vorrichtung nach Anspruch 1 definiert.

Die Verschweißung kann mittels Verpresswalzen geformt werden und/oder durch Transportbandwalzen (11) bis zum Warenspeicher (12) über bewegliche Walzen (13) und Tänzer-Walzen (14) mit ausgebildeten automatischem Ein- und Ausschalter (15) bis zur Aufwickelspule transportiert werden.

Vorzugsweise ist es vorgesehen, dass das Endprodukt aus dem Folienschlauch für die Anforderungen in Anwendungsbereichen Kabeldurchführungsabdichtung die Prüfgrundsätze PG-DMPK 1 und 2 und Dehn- und Bewegungsfugenabdichtung die Prüfgrundsätze PG-FMPB-1 und 2 ausgebildet ist.

Besonders bevorzugt ist es vorgesehen, dass die Vorrichtung zur Endlosfertigung von Folienband zum Folienschlauch und deren Endprodukte bereitgestellt ist, wie beispielsweise in EP 1867 904.B1, DE 10 2006 027888, EP Nr. 17166 769.4, PCT-EP 2017/ 065542, PCT-EP 16712 216.7 beschrieben.

Zweckmäßiger Weise ist es vorgesehen, dass das Folienband (2) universell gefaltet bis zur Formschulter (4) geführt und die Formschulter (4) nur bei abweichenden Folienschlauchbreiten zum Auswechseln ausgebildet ist.

Bevorzugt kann es vorgesehen sein, dass beim Verschweißen (5) des an der Formschulter (4) mit feststehender Teflonplatte mittig überlappten Folienbands (2) zum Folienschlauch (8), an der Unterseite vom Folienband (1) zum Abkühlen ein Wärmetauscher (6) und/oder an den Formschultern (4) vorzugsweise mit feststehender Teflonplatte zwischen dem überlappenden Folienband zur Verschweißung (5) ein Warmgas-Schweißgerät (7) zur Verschweißung zum Folienschlauch (8) vorgesehen ist. Besonders bevorzugt sind 2 Stück angetriebene Verschweiß-Presswalzen (9) und/oder zur Folienschlauch-Längskantenverformung beheizte Formschultern (10) und/oder 2 Stück angetriebene Transportwalzen (11) bereitgestellt.

Bevorzugter Weise ist zur Steuerung von Materialgeschwindigkeit und Kraft von der Folienband-Ablaufrolle (1) bis zu den angetriebenen Folienschlauch-Schweißstellen (8) (8a) des gefalteten Folienbandes, Verpresswalzen (9) und angetriebene Folienschlauch-Transportwalzen (11) bis zur Aufwickelspule (15), nämlich die Abweichungen der Umfanggeschwindigkeiten der Walzen (1, 9, 11) und der Aufwickelspule (16) über beweglichen Walzen (13), Tänzer-Walzen (14), Aufwickelspulen Ein- und Ausschalter (15) und Folienschlauch-Aufwickelspule (16), vorzugsweise im Warenspeicher (12) verteilbar/kompensierbar ist.

Die Erfindung wird in einem zweiten Aspekt durch ein Verfahren nach Anspruch 5 definiert. Die Erfindung wird nun an Hand von Ausführungsbeispielen näher erläutert. Es zeigen:
- Fig. 1: Erfindung: Formschulter-Warmgas-Schweißverfahren zur Herstellung eines Folienschlauchs aus einem Folienband Ansicht der Anlage bestehend aus Folienband-Ablaufrolle (1), Folienband (2), Folienband-Faltvorrichtung (3), Wärmetauscher (6), Formschulter (4), Warmgas-Schweißgerät (7), Verschweißung (5 a) zum Folienschlauch (8 a), beheizte Formschulter (10), Transportwalzen (11) bis zum Warenspeicher (12) der Fig. 2.
- Fig. 2: Erfindung: Steuerung der Materialgeschwindigkeit von Folienband und Folienschlauch bis zur Aufwickelspule Seitenansicht und eine perspektivische Ansicht in Erweiterung der Fig. 1 bestehend aus dem zu transportierenden Folienschlauch (8 a) bis zum Warenspeicher (12), beweglichen Walzen (13), Tänzerwalzen (14), Aufwickelspule mit automatischem Einschalter (15 a), Tänzerwalzen (14), Ausschalter (15 b), Tänzerwalzen (13), Folienschlauch-Aufwickelspule (16).
- Fig. 3: Erfindung: Formschulteraufbau Eine Querschnittsansicht der erfindungsgemäßen Vorrichtung und Eigenschaften das Folienband (2a, b, c), mittels Formschulter (4), Wärmetauscher (6), Warmgas-Schweißgerät (7), Verschweißung (5 a), feststehende Platte (5 a), Formschulter (4) (5 c) zum Folienschlauch (8 a) zu verschweißen
- Fig. 4: Trenneinlagen Bahngas-Schweißverfahren Zeigt eine Querschnittsansicht einer Folienschlauch-Schweißvorrichtung mit Trenneinlage (17) und Eigenschaften, das gleichwertige Folienband (2 a, b, c) im Bahngas-Schweißverfahren unkontrolliert zum Folienschlauch zu verschweißen.
- Fig. 5a: Spiegelschweißverfahren der Variante 1 und 2 Zeigt eine Querschnittsansicht einer Folienschlauch-Spiegelschweißvorrichtung und Eigenschaften, das gleichwertige, um 180° gefaltete Folienband (2 a, b, c) kontrolliert zu einem Folienschlauch (8a) zu verschweißen.
- Fig. 5b: Folienschlauch 180° Faltverfahren der Variante 2 Zeigt eine 180° gefaltete, im Spiegelschweißverfahren verschweißte Längskantenüberlappung (5 a) der Querverschweißung des Folienschlauchs (8 a) der Fig. 5c.
- Fig. 5c: Druckfeste Folienschlauch-Querverschlüsse der Fig. 5b im Siegelschweißverfahren Zeigt eine Querschnittsansicht des Folienschlauchs mit um 180° gefalteten Längskanten (8 d) für druckfeste Folienschlauch-Querverschlüsse (24) im Siegelschweißverfahren (22 b).
- Fig. 5d: Druckfeste Folienschlauch-Querverschlüsse im Siegelschweiß-verfahren Zeigt eine Querschnittsansicht der Siegelschweißeinrichtung (22) zur Herstellung druckfester Querverschlüsse eines Folienschlauchs (8 a).
- Fig. 6a: Zeigt eine Querschnittsansicht der Folienband-Faltvorrichtung (23 b).
- Fig. 6b: Zeigt eine Querschnittsansicht der Längskanten-Überlappung hergestellt im Siegelschweißverfahren (22)
- Fig. 6c: Zeigt eine perspektivische Ansicht druckfester Querverschlüsse (24) des Folienschlauchs (8 a)

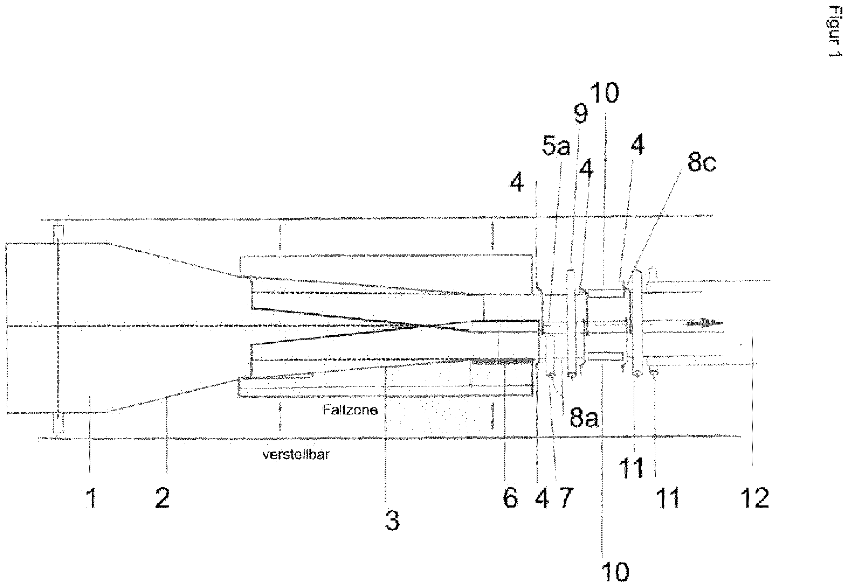

In Fig. 1 ist eine Vorrichtung einer Folienband-Ablaufrolle (1) zur Faltung als Folienschlauch (8 a) gezeigt.

Das Folienband (2) in Breiten von vorzugsweise 200 mm bis > 600 mm bestehend aus Werkstoffen PE vorzugsweise 150 - 250 µm (2 a), PET vorzugsweise 15 - 30 µm (2 b), 9 -Alu-Band vorzugsweise 23 µm (2 c) PET vorzugsweise 15-30 µm (2 b), PE (2 a) vorzugsweise 150 - 250 µm und bevorzugt Schmelz-kleberschichten wird bevorzugt über eine universell verstellbare Folienband-Falteinrichtung (3) über einen Wärmetauscher (6) in die Formschulter 1 bis 3 (4) zum Folienschlauch (8 a) gefaltet. Zwischen den Formschultern (4) erfolgt die Verschweißung der überlappten Längskanten (5 a) mit 28 bis 30 mm Breite mittels Warmgas-Schweißgerät (7). Der Folienschlauch (8 a) wird mit Aussparung der Längskanten-Überlappung (5 a) durch Verpresswalzen (9) über die beheizte Formschulter (10) zur einer Randfaltung des Folienschlauchs (8c) mit Transportwalzen (11) gezogen und bis zum Warenspeicher (12) transportiert.

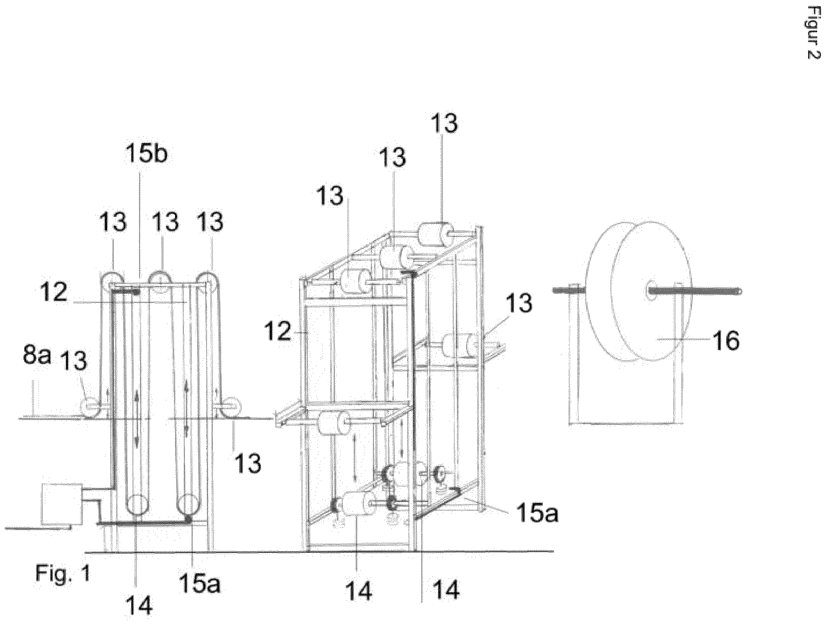

In Fig. 2 ist eine Vorrichtung zur Steuerung der Materialgeschwindigkeit des Folienschlauchs (8 a) in Längen bis etwa 500 m gezeigt, der von der Folienband-Ablaufrolle (1) über die Folienband-Falteinrichtung (3), das Warmgas-Schweißgerät (7), Verpresswalzen (9), Transportwalzen (11), bewegliche Transportwalzen (13), Tänzerwalzen (14) bis zur Folienschlauch Aufwickelspule (16) transportiert wird.

Da es bereits ab zwei längsangetriebenen Verpresswalzen (9), Transportwalzen (11) nahezu unmöglich ist, den Transport von gestrecktem Folienband (2) und Folienschlauch (8 a) bis zur Aufwickelspule (16) mit kontrollierter Warenbahn und Haftreibung zu transportieren, sowie Zugkraft und Aufwickelgeschwindigkeit des Folienschlauchs (8 a) der Aufwickelspule (16) so zu synchronisieren, sind mindestens zwei Tänzerwalzen (14) und mindestens sechs bewegliche Walzen (13) erforderlich. Der Hub der Tänzerwalzen (14) wird direkt gemessen und in ein elektrisches Signal umgesetzt. Hat der Tänzer (15 b) die obere Nulllage erreicht, wird der Transport durch die Aufwickelspule (16) ausgeschaltet. Wird durch das Gewicht und die Zugkraft der Tänzer-Walzen (15 a und 15 b) die untere Nulllage des Tänzers (15 a) erreicht, wird die Aufwickelspule (16) wieder eingeschaltet.

Die Materiallängen aus dem Warenspeicher (12) werden mit hoher Geschwindigkeit von den Tänzerwalzen (14) mit der Folienschlauch-Aufwickelspule entnommen.

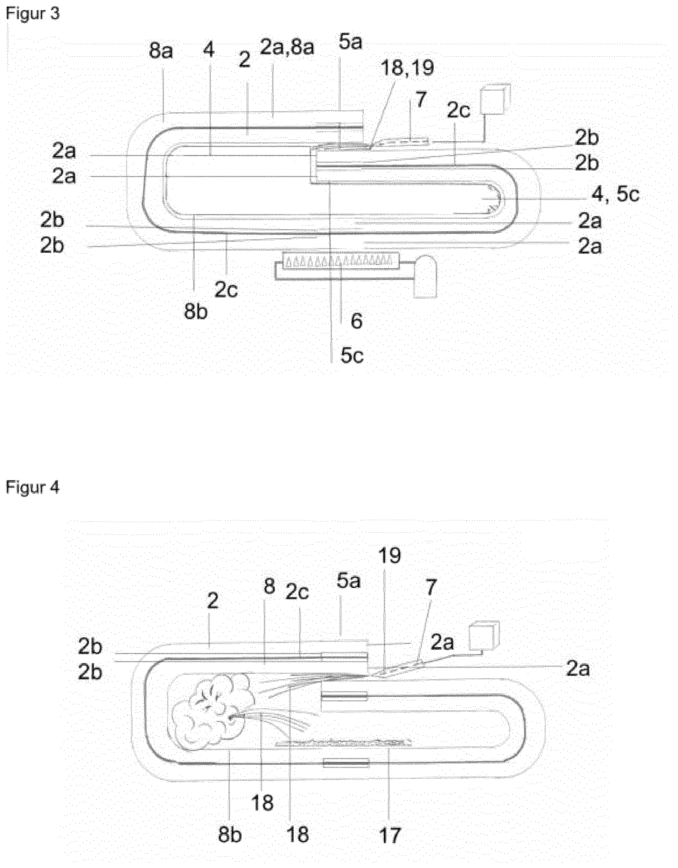

In Fig. 3 ist eine Querschnittsansicht der Formschulter (4) gemäß Erfindung, Vorrichtung und Eigenschaften zur Herstellung von Folienschlauch (8 a) gezeigt und insbesondere der Verschweißung der Längskanten-Überlappung (5 a) des so gefalteten Folienbands (2 a, b, c).

Die Formschulter (4) mit feststehender Platte stabilisiert (5 c) den längs gefalteten Folienschlauch (8 a) und verhindert bzw. reduziert eine Durchdringung der Heizluft (18) des Warmgas-Schweißgeräts (7) zum Wärmetauscher (6) der abgekühlten Folienschlauch-Unterseite (8 b), so dass zukünftig Verschmelzungen zur Längskanten-Überlappung (5 a) mit der Folienschlauch-Unterseite (8 b) und dadurch Folienschlauchschrott wie bei Anwendung der Fig. 4 vermieden werden.

In Fig. 4 ist eine Vorrichtung und Eigenschaften zur Herstellung von Folienschlauch (8 a) gezeigt und insbesondere der Verschweißung der Längskantenüberlappung (5 a) des gefalteten Folienbandes (2a, b, c) im direkten Vergleich.

Zwischen die Folienband-Längskantenüberlappung (5a) wird bevorzugt mittels Bahngasschweißverfahren (7) über eine Warmgasdüse (19) Heizluft (18) und/oder einer Antihaft-Trenneinlage (silikonisiertes Papier) (17) auf der Folienschlauch-Unterseite (8 b) aufgelegt und als Folienschlauch gefaltet und/oder verschweißt (8 a). Durch fehlende Zwangsfixierung der Folienband-Längskantenüberlappung (5 a) und fehlender Heizluft (18) Sperrschicht und Folienschlauchtransport entstehen unsymmetrische Überlappungen der Folienlängskanten (8 a) und Verschmelzungen der Folienschlauch- Ober- (8 a) mit der -unterseite (8 b).

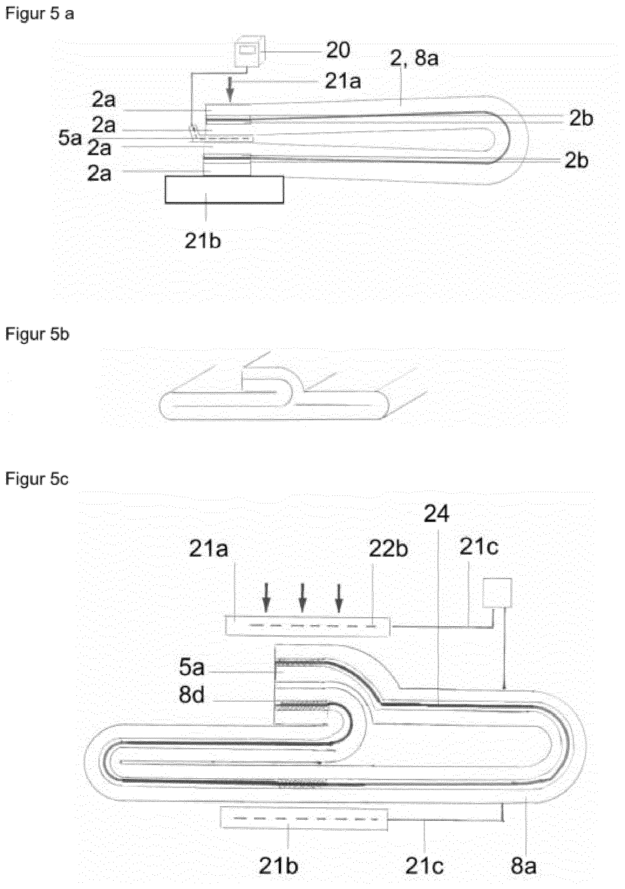

In Fig. 5a ist eine Vorrichtung und Eigenschaften zur Herstellung von Folienschlauch (8 a) gezeigt, insbesondere im Spiegelschweißverfahren (20) im direkten Vergleich zu Fig. 3 und Fig. 4.

Zwischen dem 180° gefalteten Folienband (2) zum Folienschlauch (8a) befindet sich zwischen den Folien der Längskantenüberlappung eine Spiegelschweißeinrichtung (20) bestehend aus einem Gewicht der Verpresseinrichtung (21 a) und feststehenden Platten (21 b). Der gefaltete und verschweißte Folienschlauch (8 a) kann während des Spiegelschweißverfahrens (20) transportiert werden. Er ist jedoch nicht verwendbar für druckgefüllte Abdichtsysteme und deren Anforderung nach Prüfgrundsätzen PG-DMPK-1 und 2.

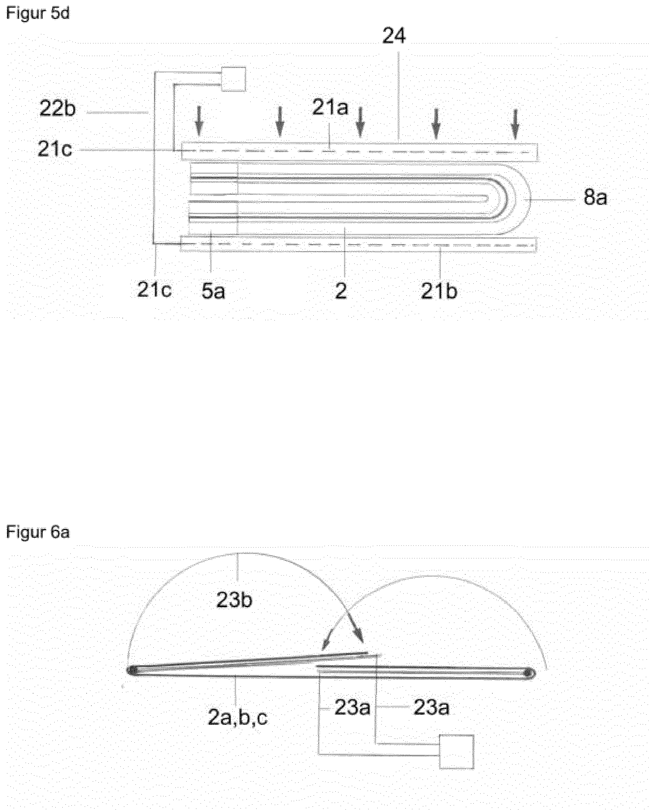

In Fig. 5b ist eine Längskantenüberlappung des Folienbandes der Fig. 5a eines im Spiegelschweißverfahren hergestellten Folienschlauchs (8 a) gezeigt, mit einer Längskantenüberlappung um 180° zur Weiterverarbeitung Fig. 5 c.

In Fig. 5c ist eine Querschnittsansicht des Folienschlauchs mit um 180° gefalteten Längskanten (8 d) gezeigt, für druckfeste Folienschlauch-Querverschlüsse (24) im Siegelschweißverfahren (22 b).

Der Folienschlauch (8 a) wird nach der Längskantenüberlappung und Verschweißung (5 a) so gefaltet, dass sich die seitlich überlappte Verschweißung (5 a) mittig auf dem Folienschlauch befindet (8 d). Die Siegelschweißeinrichtung (22 b) zur druckfesten Querverschweißung (24) des Folienschlauchs besteht aus Heizpatronen (21 c), beheiztem Gewicht (21 a) und beheizter, feststehender Platte (21 b).

**In** Fig. 5d ist eine Querschnittsansicht des Folienschlauchs (8 a) gezeigt, der Variante 1 Fig. 5a für druckfeste Folienschlauch-Querverschlüsse (24) im Siegelschweißverfahren (22 b).

Die Siegelschweißeinrichtung (22 b) zur druckfesten Querverschweißung (24) des Folienschlauchs besteht aus mit Heizpatronen (21 c) bestücktem Gewicht (21 a) und mit Heizpatronen bestückter feststehender Platte (21 b).

**In** Fig. 6a ist eine Folienband-Faltvorrichtung eines Folienbandes (2a, b, c) gezeigt, in einer pneumatischen Folienband-Faltvorrichtung (23b) und beheiztem Formschwert (23a).

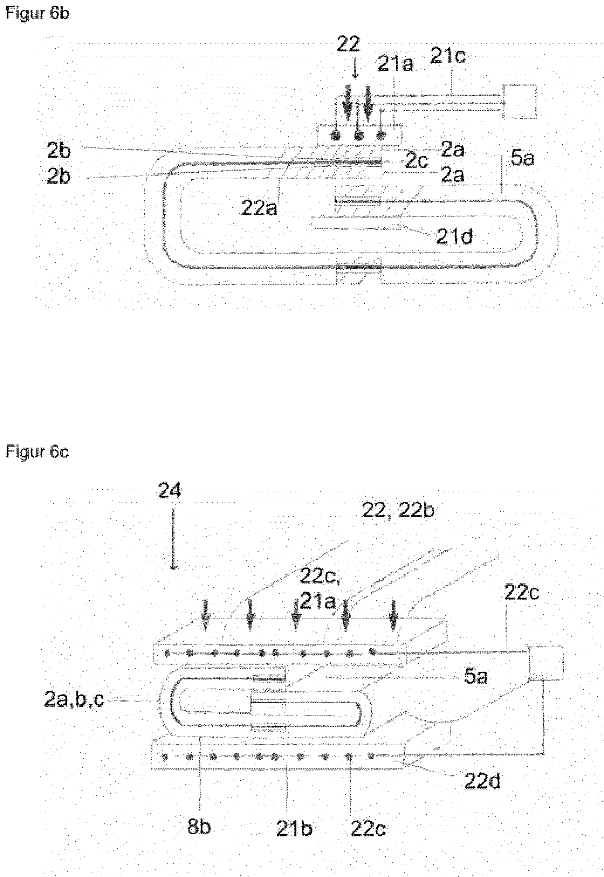

**In** Fig. 6b ist eine Querschnittsansicht der Längskanten-Überlappung eines Folienbandes (2, b, c) gezeigt in einer Siegelschweißeinrichtung (22) mit < 1 m Länge, eine Gewicht-beheizte Platte (21), Heizpatrone (21c) und feststehende, teflonbeschichtete Isolierplatte (21 d) zur Verschweißung der Längskantenüberlappung(22a) zum Folienschlauch (5a).

**In** Fig. 6c ist eine perspektivische Ansicht der druckfesten Querverschweißung (24) des Folienschlauchs (8a) gezeigt, Variante 4 und Endprodukt Fig. 3 und Erfindung zur Herstellung von patentierten Endprodukten von Kabel-, Dehn- und Bewegungsfugenabdichtungen, Folienband (2a, b, c) in 3 Lagen nach Verschweißung der Längskanten-Überlappung (22a, 5 a) mit der Unterseite (8 b), druckfeste Querverschweißung des Folienschlauchs (22) im Siegelschweißverfahren (22 b) bestehend aus einer teflonbeschichteten Gewichtsplatte (22 c), beheizten Gewichten (21 a) der Verpresseinrichtung, feststehenden Platte (21 b) und Heizpatrone (22 c).

### Bezugszeichenliste

### Begriffserklärung/ verwendete Abkürzungen

| | | | | |
|---|---|---|---|---|
| 1 | Folienband-Ablaufrolle | | | |
| 2 | Folienband | | | |
| | 2 a | 150 - 250 µm | PE | Kristallit-Schmelzpunkt 105 - 155°C |
| | 2 b | 15 - 30 µm | PET | Kristallit-Schmelzpunkt 255 - 260°C |
| | 2 c | 15 - 30 µm | Alu | Kristallit-Schmelzpunkt |
| | Schmelzkleber zwischen jeder Lage | | | |
| 3 | Folienband-Falteinrichtung | | | |
| 4 | Formschulter | | | |
| 5 | Verschweißung | | | |
| | 5 a | der Längskanten-Überlappung | | |
| | 5 b | der Längskanten-Überlappung 180° umgebogen | | |
| | 5 c | feststehende Platte | | |
| 6 | Wärmetauscher | | | |
| 7 | Warmgas-Schweißgerät | | | |
| 8 | Folienschlauch | | | |
| | 8 a | gefaltet/ verschweißt | | |
| | 8 b | Unterseite | | |
| | 8 c | Randfaltung | | |
| | 8 d | gefaltet, verschweißt mit 180° Längsfaltung | | |
| 9 | Verpresswalzen | | | |
| 10 | Beheizte Formschulter | | | |
| 11 | Transportwalzen | | | |
| 12 | Warenspeicher | | | |
| 13 | Bewegliche Walzen | | | |
| 14 | Tänzer Walzen | | | |

### Bezugszeichenliste

### Begriffserklärung/ verwendete Abkürzungen

| | | |
|---|---|---|
| 15 | Aufwickelspule | |
| | 15 a (14) automatischer Einschalter | |
| | 15 b (13) automatischer Ausschalter | |
| 16 | Folienschlauch, Aufwickelspule | |
| 17 | Antihaft-Trenneinlage, silikonisiertes Papier, Schleppzunge | |
| 18 | Heizluft 80 -100 l/ min | |
| 19 | Warmgasdüse | |
| 20 | Spiegelschweißverfahren | |
| 21 | Verpressung Schweißnaht | |
| | 21 a | Gewicht |
| | 21 b | Feststehende Platte |
| | 21 c | Heizpatrone |
| | 21 d | feststehende teflonbeschichtete Isolierplatte |
| 22 | Siegelschweißverfahren | |
| | 22 a | Längsverschweißung Länge < 1 m |
| | 22 b | Querverschweißung |
| | 22 c | beheizte teflonbeschichtete Gewichtsplatte |
| | 22 d | feststehende, beheizte teflonbeschichtete Gewichtsplatte |
| | 22 e | Heizpatronen |
| 23 a | beheiztes Formschwert | |
| 23 b | pneumatische Folienband-Faltvorrichtung | |
| 24 | Druckfeste Folienschlauch-Querverschlüsse | |

## Patentansprüche

1. Vorrichtung zum Formschulter-Schweißverfahren, zur Herstellung eines Folienschlauchs zur weiteren Verarbeitung zu mit Luft oder flüssigen Medien befüllbaren Kabeldurchführungs- und Dehn- und Bewegungsfugenabdichtungen für besondere Betriebsbedingungen wie vorzugsweise Leckrate 2,7 mbarl/Jahr, 10 N Zug und 9 bar Druck aus einem fünfschichtigen bis 500 µm dicken Folienband in Breiten von 100 mm bis 285 mm und Längen über 250 m,
wobei eine Folienband-Ablaufrolle (1) bereitgestellt ist, von welcher Folienband (2) einer Folienband-Falteinrichtung (3) zuführbar ist, welche,
- einen Wärmetauscher (6) für das Folienband und eine Formschulter (4) aufweist, welche bereitgestellt sind, die Folienband-Längskanten in der Mitte des Folienbandes (2) zum Folienschlauch (8) geformt überlappend anzuordnen und
- ein Warmgas-Schweißgerät (7) vorgesehen ist, welches zwischen den oder auf die überlappenden Längskannten des Folienbands ausgerichtet ist und ausgebildet ist, dieses zu einem Folienschlauch (8) zu verschweißen **dadurch gekennzeichnet,**
**dass** beheizte Formschultern (10) bereitgestellt und ausgerichtet sind, Folienschlauch-Längskanten (8) flach auszuformen.

2. Vorrichtung nach Anspruch 1
**dadurch gekennzeichnet**
**dass** Verpresswalzen (9) zur Verschmelzung der Folienlängskannten-Überlappung, insbesondere zur Bildung einer Verschweißnaht des Folienschlauchs, bereitgestellt sind.

3. Vorrichtung nach Anspruch 1
**dadurch gekennzeichnet**
**dass** Transportbandwalzen (11) bereitgestellt sind, den Folienschlauch einem Warenspeicher (12) über bewegliche Walzen (13) und Tänzer-Walzen (14) einer Aufwickelspule (16) zuzuführen, wobei die beweglichen Walzen und Tänzerwalzen Abweichungen der Umfanggeschwindigkeiten der Transportbandwalzen, Verpresswalzen und/oder der Folienband-Ablaufrolle (1, 9, 11) kompensieren.

4. Vorrichtung nach einem der vorhergehenden Ansprüche
**dadurch gekennzeichnet,**
**dass** die Formschulter (4) für verschiedene Folienschlauchbreiten auswechselbar ausgebildet ist.

5. Verfahren zur Herstellung eines Folienschlauchs zur weiteren Verarbeitung zu mit Luft oder flüssigen Medien befüllbaren Kabeldurchführungs- und Dehn- und Bewegungsfugenabdichtungen, vorzugsweise für besondere Betriebsbedingungen wie beispielsweise Leckrate 2,7 mbarl/Jahr, 10 N Zug und 9 bar Druck aus einem fünfschichtigen bis 500 µm dicken Folienband in Breiten von 100 mm bis 285 mm und Längen über 250 m, wobei
das Folienband (2) von einer Folienband-Ablaufrolle (1) über eine Folienband-Falteinrichtung (3), einen Wärmetauscher (6) und eine Formschulter (4) zugeführt und
mit Überlappung der Folienband-Längskanten in der Mitte des Folienbandes (2) zum Folienschlauch (8) geformt wird, wobei das Folienband mittels einem Warmgas-Schweißgeräts (7) zum Folienschlauch (8) verschweißt wird, und
**dadurch gekennzeichnet, dass** die Verschweißung durch Verpresswalzen (9) sowie die Folienschlauch-Längskanten (8) durch beheizte Formschultern (10) flach geformt werden.

6. Verfahren nach Anspruch 5
**dadurch gekennzeichnet,**
**dass** der Folienschlauch mittels Transportbandwalzen (11) bis zum Warenspeicher (12) über bewegliche Walzen (13) und Tänzer-Walzen (14) mit ausgebildeten automatischem Ein- und Ausschalter (15) bis zur Aufwickelspule transportiert wird.

7. Verfahren nach Anspruch 5 oder 6,
**dadurch gekennzeichnet,**
**dass** das Folienband (2) universell gefaltet bis zur Formschulter (4) geführt wird.

## Claims

1. Device for a forming shoulder welding process, for producing a tubular film for further processing into cable penetrations and expansion and movement joint seals that can be filled with air or liquid media for special operating conditions such as preferably leak rate 2.7 mbar l/year, 10 N tension and 9 bar pressure from a five-layer film strip up to 500 µm thick in widths from 100 mm to 285 mm and lengths over 250 m,
wherein a film strip unwinding roll (1) is provided, from which film strip (2) can be fed to a film strip folding device (3), which has a heat exchanger (6) for the film strip and a forming shoulder (4), which are provided to arrange the film strip longitudinal edges overlapping in the center of the film strip (2) formed into the tubular film (8) and
a hot gas welding device (7) is provided, which is aligned between or on the overlapping longitudinal edges of the film strip and is designed to weld this into a tubular film (8)
**characterized in that**
heated forming shoulders (10) are provided and aligned to flatten tubular film longitudinal edges (8).

2. Device according to claim 1
**characterized in that**
compression rollers (9) are provided for fusing the film longitudinal edge overlap, in particular for forming a weld seam of the tubular film.

3. Device according to claim 1
**characterized in that**
transport belt rollers (11) are provided to feed the tubular film to a material storage (12) via movable rollers (13) and dancer rollers (14) to a winding spool (16), wherein the movable rollers and dancer rollers compensate for deviations in the circumferential speeds of the transport belt rollers, compression rollers and/or the film strip unwinding roll (1, 9, 11).

4. Device according to any of the preceding claims
**characterized in that**
the forming shoulder (4) is designed to be exchangeable for different tubular film widths.

5. Method for producing a tubular film for further processing into cable penetrations and expansion and movement joint seals that can be filled with air or liquid media, preferably for special operating conditions such as for example leak rate 2.7 mbar l/year, 10 N tension and 9 bar pressure from a five-layer film strip up to 500 µm thick in widths from 100 mm to 285 mm and lengths over 250 m,
wherein
the film strip (2) is fed from a film strip unwinding roll (1) via a film strip folding device (3), a heat exchanger (6) and a forming shoulder (4) and
is formed into the tubular film (8) with overlap of the film strip longitudinal edges in the center of the film strip (2), wherein the film strip is welded into the tubular film (8) by means of a hot gas welding device (7), and
**characterized in that** the welding is formed by compression rollers (9) and the tubular film longitudinal edges (8) are flattened by heated forming shoulders (10).

6. Method according to claim 5
**characterized in that**
the tubular film is transported by means of transport belt rollers (11) up to the material storage (12) via movable rollers (13) and dancer rollers (14) with integrated automatic on and off switches (15) up to the winding spool.

7. Method according to claim 5 or 6,
**characterized in that**
the film strip (2) is universally folded up to the forming shoulder (4).

## Revendications

1. Dispositif pour le procédé de soudage à épaulement de formage, pour la fabrication d'un tube en film destiné à être transformé en joints d'étanchéité pour passages de câbles et joints de dilatation et de mouvement pouvant être remplis d'air ou de milieux liquides, pour des conditions de fonctionnement particulières telles que, de préférence, un taux de fuite de 2,7 mbarl/an, une traction de 10 N et une pression de 9 bars, à partir d'une bande de film à cinq couches d'une épaisseur allant jusqu'à 500 µm, d'une largeur de 100 mm à 285 mm et d'une longueur supérieure à 250 m,
où un rouleau dérouleur de bande de film (1) est prévu, à partir duquel la bande de film (2) peut être alimentée à un dispositif de pliage de bande de film (3), qui
comprend un échangeur de chaleur (6) pour la bande de film et un épaulement de formage (4), qui sont prévus pour disposer les bords longitudinaux de la bande de film de manière chevauchante au centre de la bande de film (2) formée en tube de film (8), et
un appareil de soudage à gaz chaud (7) est prévu, qui est aligné entre ou sur les bords longitudinaux chevauchants de la bande de film et est conçu pour souder celle-ci en un tube de film (8)
**caractérisé en ce que**
des épaulements de formage chauffés (10) sont prévus et alignés pour former à plat les bords longitudinaux du tube de film (8).

2. Dispositif selon la revendication 1
**caractérisé en ce que**
des rouleaux de compression (9) sont prévus pour la fusion du chevauchement des bords longitudinaux du film, en particulier pour former un cordon de soudure du tube de film.

3. Dispositif selon la revendication 1
**caractérisé en ce que**
des rouleaux de bande transporteuse (11) sont prévus pour alimenter le tube de film à un magasin de marchandises (12) via des rouleaux mobiles (13) et des rouleaux danseurs (14) d'une bobine d'enroulement (16), les rouleaux mobiles et les rouleaux danseurs compensant les écarts de vitesse périphérique des rouleaux de bande transporteuse, des rouleaux de compression et/ou du rouleau dérouleur de bande de film (1, 9, 11).

4. Dispositif selon l'une quelconque des revendications précédentes
**caractérisé en ce que**
l'épaulement de formage (4) est conçu pour être interchangeable pour différentes largeurs de tube de film.

5. Procédé de fabrication d'un tube en film destiné à être transformé en joints d'étanchéité pour passages de câbles et joints de dilatation et de mouvement pouvant être remplis d'air ou de milieux liquides, de préférence pour des conditions de fonctionnement particulières telles que, par exemple, un taux de fuite de 2,7 mbarl/an, une traction de 10 N et une pression de 9 bars, à partir d'une bande de film à cinq couches d'une épaisseur allant jusqu'à 500 µm, d'une largeur de 100 mm à 285 mm et d'une longueur supérieure à 250 m,
dans lequel
la bande de film (2) est alimentée d'un rouleau dérouleur de bande de film (1) via un dispositif de pliage de bande de film (3), un échangeur de chaleur (6) et un épaulement de formage (4) et
est formée en tube de film (8) avec chevauchement des bords longitudinaux de la bande de film au centre de la bande de film (2), la bande de film étant soudée en tube de film (8) au moyen d'un appareil de soudage à gaz chaud (7), et
**caractérisé en ce que** la soudure est formée par compression à l'aide de rouleaux de compression (9) et les bords longitudinaux du tube de film (8) sont formés à plat par des épaulements de formage chauffés (10).

6. Procédé selon la revendication 5
**caractérisé en ce que**
le tube de film est transporté au moyen de rouleaux de bande transporteuse (11) jusqu'au magasin de marchandises (12) via des rouleaux mobiles (13) et des rouleaux danseurs (14) avec un interrupteur automatique intégré (15) jusqu'à la bobine d'enroulement.

7. Procédé selon la revendication 5 ou 6,
**caractérisé en ce que**
la bande de film (2) est guidée de manière universellement pliée jusqu'à l'épaulement de formage (4).
